# EUROPEAN PATENT SPECIFICATION

(11) **EP 3 899 245 B1**
(45) Date of publication and mention of the grant of the patent: **13.03.2024**
(21) Application number: 18836756.9
(22) Date of filing: 19.12.2018
(51) Int. Cl.: F03D 1/06, B29C 70/06, B29L 31/08, B29K 105/14

(54) **WIND TURBINE ROTOR BLADE SHELL WITH VARYING FIBER TYPES**
WINDTURBINENLAUFSCHAUFELSCHALE MIT VARIIERENDEN FASERTYPEN
COQUE DE PALE DE ROTOR D'ÉOLIENNE À TYPES DE FIBRES VARIABLES

(43) Date of publication of application: 27.10.2021
(73) Proprietor: LM Wind Power A/S, 6000 Kolding (DK)
(72) Inventor: MERZHAEUSER, Thomas, 85748 Garching b. Muenchen (DE); VELDKAMP, Bart Jan, 48499 Salzbergen (DE)
(74) Representative: COPA Copenhagen Patents
(86) International application number: PCT/US2018/066380
(87) International publication number: WO 2020/131044

(56) References cited:
- EP-A1- 2 957 765
- EP-A1- 3 109 460
- WO-A2-2011/067323
- US-A1- 2014 140 855
- US-A1- 2014 193 269
- US-A1- 2016 040 651

## Description

### FIELD

The present disclosure relates generally to wind turbines, and more particularly to wind turbine rotor blade shells having varying fiber types.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves. The rotor blade shells are typically constructed of a laminate having sandwich-panel configuration that includes low stiffness glass fibers, see for example US2014140855A1.

As wind turbines continue to increase in size, the rotor blades also increase in size. Thus, larger rotor blades may be constructed in segments that can be assembled on site at one or more joints. Longer rotor blades make the use of higher quality, stiffer, and lighter but more expensive materials more necessary. The extra weight of the joints also increases the need for lighter materials to compensate for the extra weight of the joints. However, current rotor blades have only been able to use lighter and stiffer materials in spar caps as such materials typically do not allow for a wave-free layup of the fibers when constructing the blade shells. As such, the possible maximal stiffness is limited by the aspect ratio of the waves, introduced by the process to construct the shells.

Accordingly, the present disclosure is directed to an improved wind turbine rotor blade shell having varying fiber types and method of manufacturing same that includes stiffer and lighter materials, but that limits such material to areas of the shell that can be produced with the required wave-free layup quality.

### BRIEF DESCRIPTION

Aspects and advantages of the invention will be set forth in part in the following description, or may be obvious from the description, or may be learned through practice of the invention. The invention is defined by independent claims 1 and 7.

In one aspect, the present disclosure is directed to a rotor blade for a wind turbine. The rotor blade includes at least one blade segment having at least one shell member defining an airfoil surface. The shell member(s) includes a sandwich panel configuration having one or more inner skin layers, a core material, and one or more outer skin layers. The outer skin layer(s) includes one or more first fibers, whereas the inner skin layer(s) includes one or more different second fibers. Further, the first fiber(s) of the outer skin layer(s) have a higher elastic modulus than the second fiber(s) of the inner skin layer(s).

In one embodiment, each of the first fiber(s) of the outer skin layer(s) has a lighter density than each of the second fiber(s) of the inner skin layer(s). More specifically, in certain embodiments, the first fiber(s) may be carbon or aramid fibers, whereas the second fiber(s) may be glass fibers, polymer fibers, wood fibers, bamboo fibers, ceramic fibers, nanofibers, or metal fibers. In another embodiment, the core material may be, for example, foam or wood.

In further embodiments, the blade segment(s) may include, at least, a first blade segment and a second blade segment extending in opposite directions from a chord-wise joint. In such embodiments, the first blade segment may include a beam structure extending lengthwise that structurally connects with the second blade segment via a receiving section. In additional embodiments, the rotor blade may also include a plurality of chord-wise joints.

In another aspect, the present disclosure is directed to a method of manufacturing a shell member of a rotor blade for a wind turbine. The method includes placing one or more outer skin layers adjacent to a mold of the shell member. The outer skin layer(s) include one or more first fibers. The method also includes placing one or more inner skin layers adjacent to the outer skin layer(s). The inner skin layer(s) include one or more different, second fibers. Further, the first fiber(s) of the outer skin layer(s) have a higher elastic modulus than the second fiber(s) of the inner skin layer(s). The method also includes infusing the outer skin layer(s) and the inner skin layer(s) together via a resin material to form the shell member. It should be further understood that the method may also include any of the additional steps and/or features described herein.

In yet another aspect, the present disclosure is directed to a method of manufacturing a shell member of a rotor blade for a wind turbine. The method includes placing one or more outer skin layers adjacent to a mold of the shell member. The outer skin layer(s) include one or more first fibers. The method also includes placing a core material adjacent to the outer skin layer(s). Further, the method includes placing one or more inner skin layers adjacent to the core material. The inner skin layer(s) include one or more different, second fibers. Further, a density of each of the first fiber(s) is lighter than a density of each of the second fiber(s). The method also includes infusing the outer skin layer(s), the core material, and the inner skin layer(s) together via the resin material. It should be further understood that the method may also include any of the additional steps and/or features described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a plan view of one embodiment of a rotor blade having a first blade segment and a second blade segment according to the present disclosure;
FIG. 3 illustrates a perspective view of a section of one embodiment of the first blade segment according to the present disclosure;
FIG. 4 illustrates a perspective view of one embodiment of a section of the second blade segment at the chord-wise joint according to the present disclosure;
FIG. 5 illustrates an assembly of one embodiment of the rotor blade of the wind turbine having the first blade segment joined with the second blade segment according to the present disclosure;
FIG. 6 illustrates an exploded perspective view of one embodiment of the multiple supporting structures of the assembly of the rotor blade of the wind turbine according to the present disclosure;
FIG. 7A illustrates a side view of one embodiment of a segmented rotor blade according to the present disclosure, particularly illustrating an optional joint location of the segmented rotor blade;
FIG. 7B illustrates a side view of another embodiment of a segmented rotor blade according to the present disclosure, particularly illustrating another optional joint location of the segmented rotor blade;
FIG. 7C illustrates a side view of still another embodiment of a segmented rotor blade according to the present disclosure, particularly illustrating a rotor blade having multiple joints;
FIG. 7D illustrates a side view of one embodiment of a non-segmented rotor blade according to the present disclosure;
FIG. 8 illustrates a perspective view of one embodiment of a shell member of a rotor blade according to the present disclosure;
FIG. 9 illustrates a cross-sectional view of the shell member of FIG. 8 along section line 8-8;
FIG. 10A illustrates a perspective view of one embodiment of two molds for shell members of a rotor blade according to the present disclosure;
FIG. 10B illustrates a perspective view of an outer skin layer placed atop the two molds of the shell members of FIG. 10A;
FIG. 10C illustrates a perspective view of a core material placed atop the outer skin layer of the shell members of FIG. 10B;
FIG. 10D illustrates a perspective view of an inner skin layer placed atop the core material of the shell members of FIG. 10C; and
FIG. 10E illustrates a perspective view of one embodiment of a completed rotor blade that includes two shell members according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

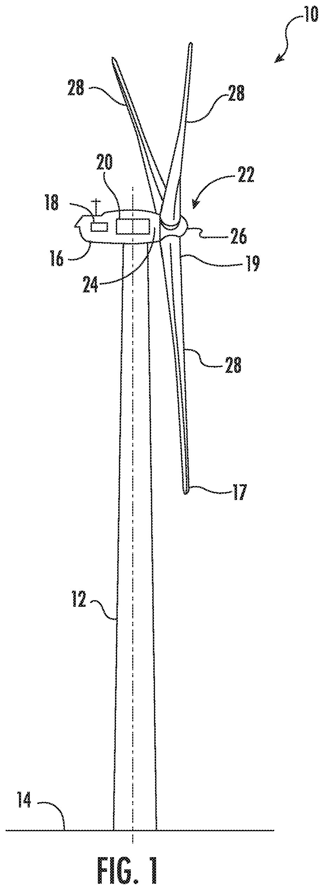

Referring now to the drawings, FIG. 1 illustrates a perspective view of one embodiment of a wind turbine 10 according to the present invention. In the illustrated embodiment, the wind turbine 10 is a horizontal-axis wind turbine. Alternatively, the wind turbine 10 may be a vertical-axis wind turbine. In addition, as shown, the wind turbine 10 may include a tower 12 that extends from a support surface 14, a nacelle 16 mounted on the tower 12, a generator 18 positioned within the nacelle 16, a gearbox 20 coupled to the generator 18, and a rotor 22 that is rotationally coupled to the gearbox 20 with a rotor shaft 24. Further, as shown, the rotor 22 includes a rotatable hub 26 and at least one rotor blade 28 coupled to and extending outward from the rotatable hub 26. As shown, the rotor blade 28 includes a blade tip 17 and a blade root 19.

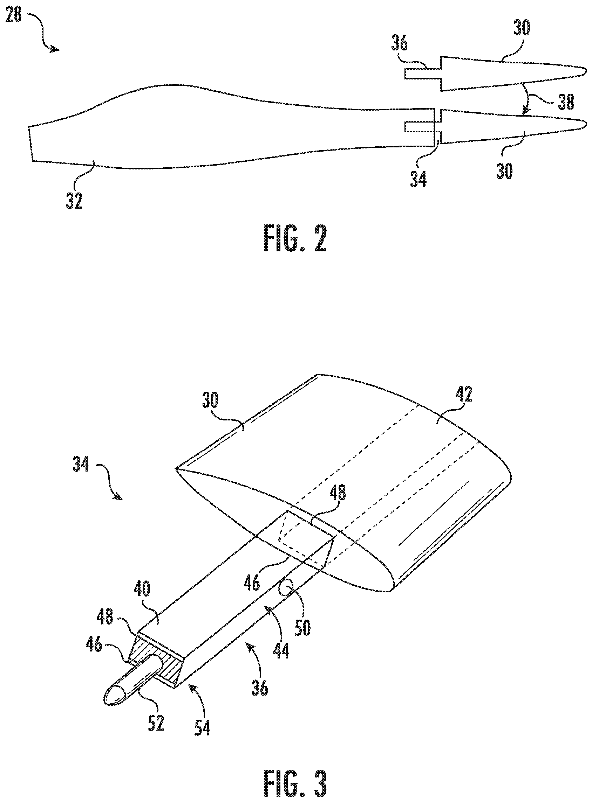

Referring now to FIG. 2, a plan view of one of the rotor blades 28 of FIG. 1 is illustrated. As shown, the rotor blade 28 may include a first blade segment 30 and a second blade segment 32. Further, as shown, the first blade segment 30 and the second blade segment 32 may each extend in opposite directions from a chord-wise joint 34. In addition, as shown, each of the blade segments 30, 32 may include a pressure side shell member and a suction side shell member. The first blade segment 30 and the second blade segment 32 are connected by at least an internal support structure 36 extending into both blade segments 30, 32 to facilitate joining of the blade segments 30, 32. The arrow 38 shows that the segmented rotor blade 28 in the illustrated example includes two blade segments 30, 32 and that these blade segments 30, 32 are joined by inserting the internal support structure 36 into the second blade segment 32.

Referring now to FIG. 3, a perspective view of a section of the first blade segment 30 according to the present disclosure is illustrated. As shown, the first blade segment 30 includes a beam structure 40 that forms a portion of the internal support structure 36 and extends lengthwise for structurally connecting with the second blade segment 32. Further, as shown, the beam structure 40 forms a part of the first blade segment 30 having an extension protruding from a spar section 42, thereby forming an extending spar section. The beam structure 40 includes a shear web 44 connected with a suction side spar cap 46 and a pressure side spar cap 48.

Moreover, as shown, the first blade segment 30 may include one or more first pin joints at a first end 54 of the beam structure 40. In one embodiment, the pin joint may include a pin that is in a tight interference fit with a bushing. More specifically, as shown, the pin joint(s) may include one pin tube 52 located on the beam structure 40. Thus, as shown, the pin tube 52 may be oriented in a span-wise direction. Further, the first blade segment 30 may also include a pin joint slot 50 located on the beam structure 40 at the chord-wise joint 34. Moreover, as shown, the pin joint slot 50 may be oriented in a chord-wise direction.

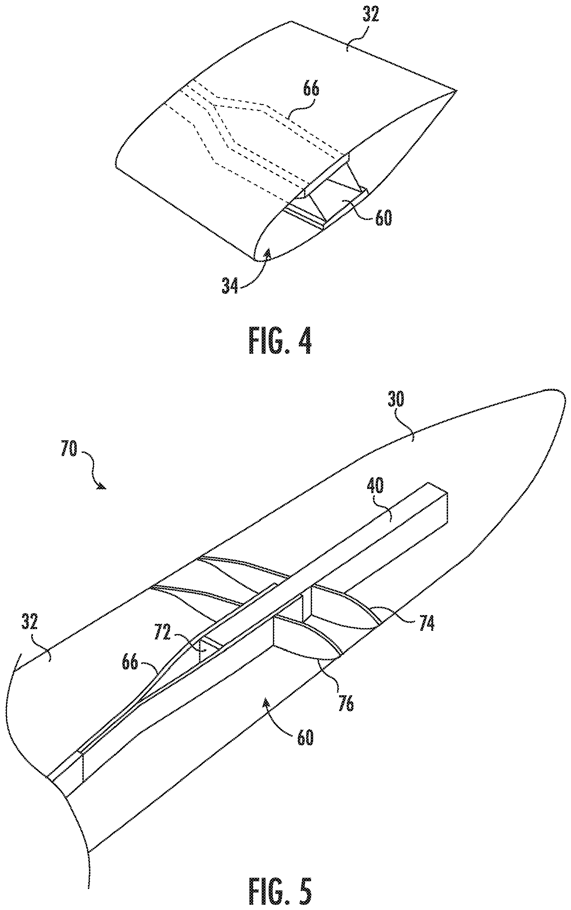

Referring now to FIG. 4, a perspective view of a section of the second blade segment 32 at the chord-wise joint 34 according to the present disclosure is illustrated. As shown, the second blade segment 32 includes a receiving section 60 extending lengthwise within the second blade segment 32 for receiving the beam structure 40 of the first blade segment 30. Further, as shown, the receiving section 60 may include the spar structures 66 that extend lengthwise for connecting with the beam structure 40 of the first blade segment 30.

Referring now to FIG. 5, an assembly 70 of the rotor blade 28 having the first blade segment 30 joined with the second blade segment 32 according to the present disclosure is illustrated. As shown, the assembly 70 illustrates multiple supporting structures beneath outer shell members of the rotor blade 28 having the first blade segment 30 joined with the second blade segment 32. Further, as shown, the receiving section 60 includes the multiple spar structures 66 extending lengthwise and supports the beam structure 40. The receiving section 60 also includes a rectangular fastening element 72 that connects with the pin tube 52 of the beam structure 40 in the span-wise direction. Further, the first and the second blade segments 30, 32 may also include chord-wise members 74, 76 respectively at the chord-wise joint 34. In another embodiment, each of the spar structures 66, the rectangular fastening element 72, and the chord-wise members 74, 76 may be constructed of glass reinforced fibers.

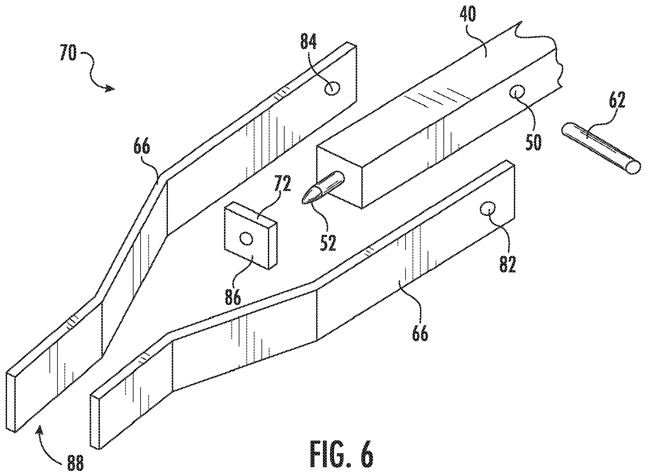

Referring now to FIG. 6, an exploded perspective view of the multiple supporting structures of the assembly 70 towards the receiving section 60 of the rotor blade 28 is illustrated. As shown, the spar structures 66 are configured to receive the beam structure 40 and may include pin joint slots 82, 84 that are aligned with the pin joint slot 50 of the beam structure 40 through which a chord-wise extending pin 62 may be inserted. Further, as shown, the chord-wise extending pin 62 may be configured to remain in a tight interference fit within the aligning pin joint slots 82, 50, 84 such that spar structures 66 and the beam structure 40 are joined together during assembly. Further, FIG. 6 also illustrates the rectangular fastening element 72 that includes a pin joint slot 86 configured for receiving the pin tube 52 of the beam structure 40. As such, the pin tube 52 is configured to form a tight interference fit pined joint. Further, the pair of spar structures 66 may be joined together at one end 88 using any suitable adhesive material and/or an elastomeric seal.

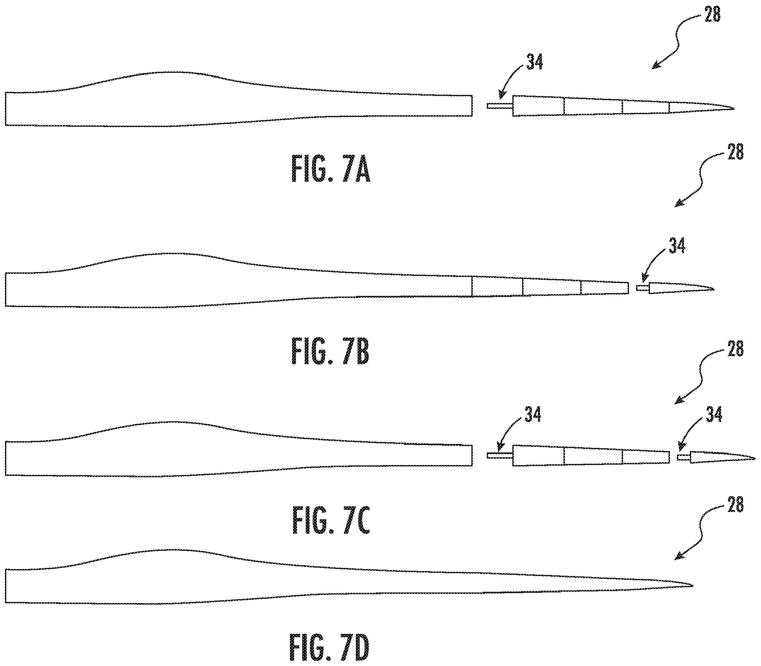

Referring now to FIGS. 2 and 7A-7D, various embodiments of the rotor blade 28 described herein are illustrated. As shown, the rotor blade 28 may be segmented (FIGS. 2 and 7A-7C) or non-segmented (FIG. 7D). In addition, as shown in FIG. 2, the rotor blade 28 may include a single chord-wise joint 34. Alternatively, as shown in FIGS. 7A-7C, the rotor blade 28 may include a plurality of chord-wise joints 34. As such, it should be understood that the shell member of the rotor blade 28 described herein may be part of a jointed rotor blade and/or a non-jointed rotor blade.

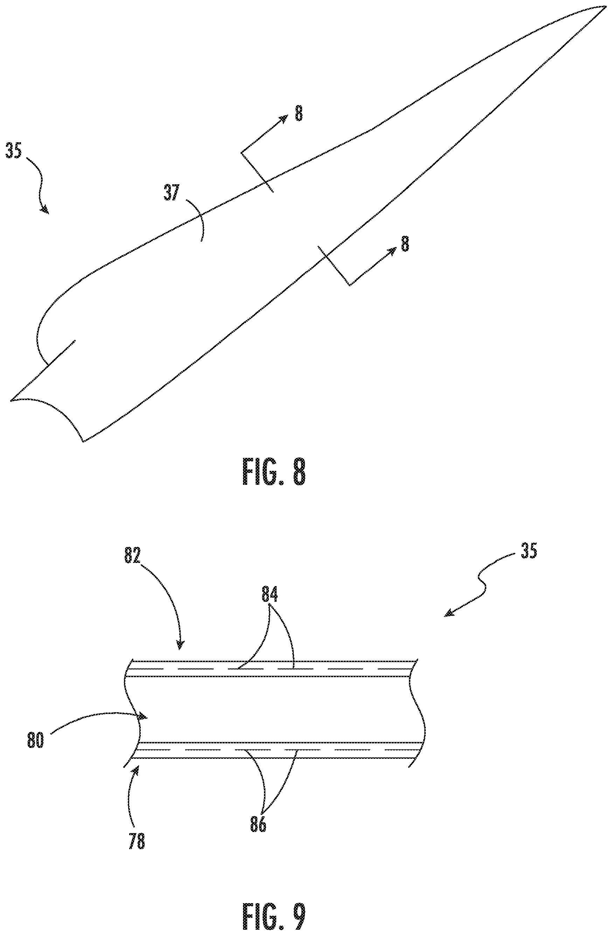

Referring particularly to FIGS. 8 and 9, various views of one embodiment of a shell member 35 of the various blade segments of the rotor blade 28 of the wind turbine 10 according to the present disclosure are illustrated. As shown particularly in FIG. 8, the shell member 35 defines an airfoil surface 37 of the rotor blade 28. In addition, as shown in FIG. 9, the shell member(s) 35 may be constructed of a sandwich panel configuration having one or more inner skin layers 78, a core material 80, and one or more outer skin layers 82. Further, as shown, the outer skin layer(s) 82 includes one or more first fibers 84, whereas the inner skin layer(s) 78 includes one or more different, second fibers 86. Moreover, as shown, the first fiber(s) 84 of the outer skin layer(s) 82 have a higher elastic modulus than the second fiber(s) 86 of the inner skin layer(s) 78.

In addition, each of the first fiber(s) 84 of the outer skin layer(s) 82 may have a lighter density than each of the second fiber(s) 86 of the inner skin layer(s) 78. For example, in certain embodiments, the first fiber(s) 84 may be carbon or aramid fibers, whereas the second fiber(s) 86 may be glass fibers, polymer fibers, wood fibers, bamboo fibers, ceramic fibers, nanofibers, or metal fibers. In another embodiment, the core

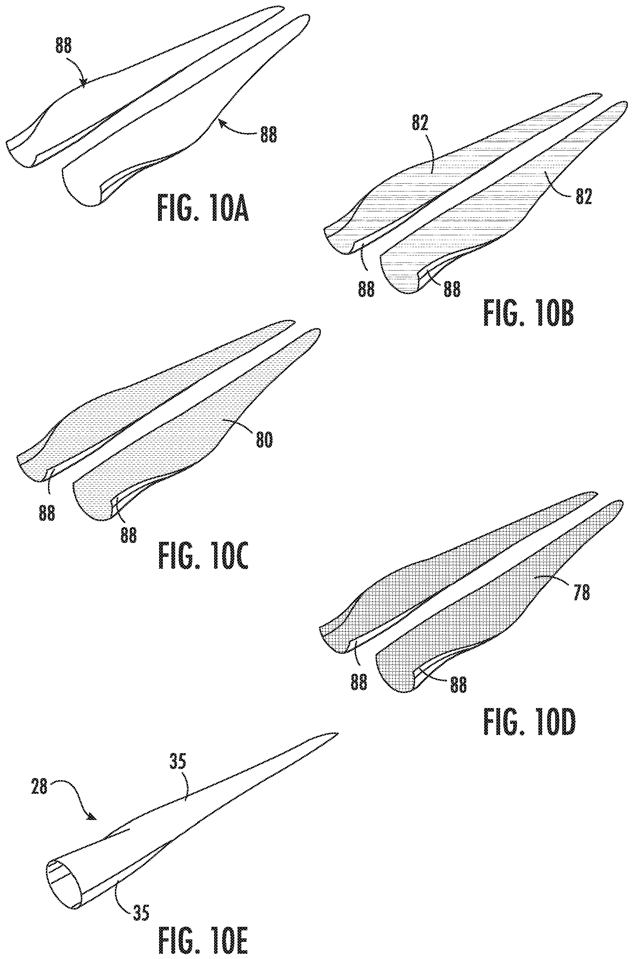

Referring now to FIGS. 10A-10E, process steps for manufacturing a shell member of a rotor blade for a wind turbine according to the present disclosure is illustrated. In general, the method 100 will be described herein with reference to the wind turbine 10 and the rotor blade 28 shown in FIGS. 1-9. However, it should be appreciated that the disclosed method 100 may be implemented with rotor blades having any other suitable configurations.

As shown in FIG. 10A, the method of manufacturing the shell member 35 may include providing a mold 88 of the shell member 5. For example, as shown, a pair of mold halves is provided for each of the pressure and suction side shell members. In addition, as shown in FIG. 10B, the method of manufacturing the shell member 35 may include placing one or more outer skin layers 82 adjacent to (or atop) a mold 88 of the shell member 35. Further, as shown, the outer skin layer(s) 82 include one or more first fibers 84. Further, as shown in FIG. 10C, the method of manufacturing the shell member 35 may include placing the core material 80 adjacent to the outer skin layer(s) 82. Moreover, as shown in FIG. 10D, the method of manufacturing the shell member 35 may include placing one or more inner skin layers 78 adjacent to the core material 80. Further, as shown, the inner skin layer(s) 78 include one or more different, second fibers 86. In addition, as mentioned, each of the first fiber(s) 84 of the outer skin layer(s) 82 has a higher elastic modulus and/or a lighter density than each of the second fiber(s) 86 of the inner skin layer(s) 78. Thus, as shown in FIG. 10E, the method of manufacturing the shell member 35 may include infusing the outer skin layer(s) 82, the core material 80, and the inner skin layer(s) 78 together via a resin material to form one of the shell members 35 that can then be used to form the rotor blade 28.

## Claims

1. A rotor blade (28) for a wind turbine (10), comprising:
at least one blade segment comprising at least one shell member (35) defining an airfoil surface, the at least one shell member (35) comprising a sandwich panel configuration, the sandwich panel configuration comprising one or more inner skin layers (78), a core material (80), and one or more outer skin layers (82), the one or more outer skin layers (82) comprising one or more first fibers, the one or more inner skin layers comprising one or more second fibers,
wherein the one or more first fibers are different than the one or more second fibers, the one or more first fibers of the one or more outer skin layers (82) comprising a higher elastic modulus than an elastic modulus of the one or more second fibers of the one or more inner skin layers (78),
wherein the core material (80) is placed between the one or more outer skin layers (82) and the one or more inner skin layers (78), and
wherein the core material (80) comprises at least one of foam or wood.

2. The rotor blade of claim 1, wherein each of the one or more first fibers of the one or more outer skin layers (82) comprises a lighter density than each of the one or more second fibers of the one or more inner skin layers (78).

3. The rotor blade of claims 1 or 2, wherein the one or more first fibers comprise carbon or aramid fibers.

4. The rotor blade of any preceding claim, wherein the one or more second fibers comprise glass fibers, polymer fibers, wood fibers, bamboo fibers, ceramic fibers, nanofibers, or metal fibers.

5. The rotor blade of any preceding claims, wherein the at least one blade segment comprises, at least, a first blade segment and a second blade segment extending in opposite directions from a chord-wise joint, the first blade segment comprising a beam structure extending lengthwise that structurally connects with the second blade segment via a receiving section.

6. The rotor blade of claim 5, further comprising a plurality of chord-wise joints.

7. A method of manufacturing a shell member (35) of a rotor blade (28) for a wind turbine (10), comprising:
placing one or more outer skin layers (82) adjacent to a mold of the shell member (35), the one or more outer skin layers (82) comprising one or more first fibers;
placing one or more inner skin layers (78) adjacent to the one or more outer skin layers (82), the one or more inner skin layers (78) comprising one or more second fibers, the one or more first fibers being different than the one or more second fibers, the one or more first fibers of the one or more outer skin layers (82) comprising a higher elastic modulus than the one or more second fibers of the one or more inner skin layers (78);
placing a core material (80) between the one or more outer skin layers (82) and the one or more inner skin layers (78); and
infusing the one or more outer skin layers (82), the core material (80), and the one or more inner skin layers (78) together via a resin material to form the shell member (35),
wherein the core material (80) comprises at least one of foam or wood.

8. The method of claim 7, wherein the resin material comprises at least one of a thermoset material and a thermoplastic material.

9. The method of any of claims 7-8, wherein each of the one or more first fibers of the one or more outer skin layers (82) comprises a lighter density than each of the one or more second fibers of the one or more inner skin layers (78).

10. The method of any of claims 7-9, wherein the one or more first fibers comprise carbon or aramid fibers.

11. The method of any of claims 7-10, wherein the one or more second fibers comprise glass fibers, polymer fibers, wood fibers, bamboo fibers, ceramic fibers, nanofibers, or metal fibers.

12. The method of any of claims 7-11, wherein the at least one blade segment comprises, at least, a first blade segment and a second blade segment extending in opposite directions from a chord-wise joint, the first blade segment comprising a beam structure extending lengthwise that structurally connects with the second blade segment via a receiving section.

## Patentansprüche

1. Rotorblatt (28) für eine Windkraftanlage (10), umfassend:
mindestens ein Blattsegment, umfassend mindestens ein Schalenelement (35), das eine Flügeloberfläche definiert, wobei das mindestens eine Schalenelement (35) eine Sandwichplattenkonfiguration umfasst, wobei die Sandwichplattenkonfiguration eine oder mehrere innere Deckschichten (78), ein Kernmaterial (80) und eine oder mehrere äußere Deckschichten (82) umfasst, wobei die eine oder die mehreren äußeren Deckschichten (82) eine oder mehrere erste Fasern umfassen, wobei die eine oder die mehreren inneren Deckschichten eine oder mehrere zweite Fasern umfassen,
wobei die eine oder die mehreren ersten Fasern von der einen oder den mehreren zweiten Fasern verschieden sind, wobei die eine oder die mehreren ersten Fasern der einen oder der mehreren äußeren Deckschichten (82) einen höheren Elastizitätsmodul umfassen als ein Elastizitätsmodul der einen oder der mehreren zweiten Fasern der einen oder der mehreren inneren Deckschichten (78),
wobei das Kernmaterial (80) zwischen der einen oder den mehreren äußeren Deckschichten (82) und der einen oder den mehreren inneren Deckschichten (78) platziert ist und
wobei das Kernmaterial (80) Schaumstoff und/oder Holz umfasst.

2. Rotorblatt nach Anspruch 1, wobei jede der einen oder der mehreren ersten Fasern der einen oder der mehreren äußeren Deckschichten (82) eine leichtere Dichte umfasst als jede der einen oder der mehreren zweiten Fasern der einen oder der mehreren inneren Deckschichten (78).

3. Rotorblatt nach Anspruch 1 oder 2, wobei die eine oder die mehreren ersten Fasern Kohlenstoff- oder Aramidfasern umfassen.

4. Rotorblatt nach einem der vorangehenden Ansprüche, wobei die eine oder die mehreren zweiten Fasern Glasfasern, Polymerfasern, Holzfasern, Bambusfasern, Keramikfasern, Nanofasern oder Metallfasern umfassen.

5. Rotorblatt nach einem der vorangehenden Ansprüche, wobei das mindestens eine Blattsegment mindestens ein erstes Blattsegment und ein zweites Blattsegment, die sich von einer in Sehnenrichtung verlaufenden Verbindungsstelle in entgegengesetzten Richtungen erstrecken, umfasst, wobei das erste Blattsegment eine sich in Längsrichtung erstreckende Balkenstruktur umfasst, die mittels eines Aufnahmeabschnitts mit dem zweiten Blattsegment konstruktiv verbunden wird.

6. Rotorblatt nach Anspruch 5, ferner umfassend eine Vielzahl von in Sehnenrichtung verlaufenden Verbindungsstellen.

7. Verfahren zum Herstellen eines Schalenelements (35) eines Rotorblatts (28) für eine Windkraftanlage (10), umfassend:
Platzieren einer oder mehrerer äußerer Deckschichten (82), sodass sie einem Formwerkzeug des Schalenelements (35) benachbart sind, wobei die eine oder die mehreren äußeren Deckschichten (82) eine oder mehrere erste Fasern umfassen;
Platzieren einer oder mehrerer innerer Deckschichten (78), sodass sie der einen oder den mehreren äußeren Deckschichten (82) benachbart sind, wobei die eine oder die mehreren inneren Deckschichten (78) eine oder mehrere zweite Fasern umfassen, wobei die einen oder die mehreren ersten Fasern von der einen oder den mehreren zweiten Fasern verschieden sind, wobei die eine oder die mehreren ersten Fasern der einen oder der mehreren äußeren Deckschichten (82) einen höheren Elastizitätsmodul umfassen als die eine oder die mehreren zweiten Fasern der einen oder der mehreren inneren Deckschichten (78);
Platzieren eines Kernmaterials (80) zwischen der einen oder den mehreren äußeren Deckschichten (82) und der einen oder den mehreren inneren Deckschichten (78); und
Tränken der einen oder der mehreren äußeren Deckschichten (82), des Kernmaterials (80) und der einen oder der mehreren inneren Deckschichten (78) zusammen mittels eines Harzmaterials, um das Schalenelement (35) zu bilden,
wobei das Kernmaterial (80) Schaumstoff und/oder Holz umfasst.

8. Verfahren nach Anspruch 7, wobei das Harzmaterial ein duroplastisches Material und/oder ein thermoplastisches Material umfasst.

9. Verfahren nach einem der Ansprüche 7-8, wobei jede der einen oder der mehreren ersten Fasern der einen oder der mehreren äußeren Deckschichten (82) eine leichtere Dichte umfasst als jede der einen oder der mehreren zweiten Fasern der einen oder der mehreren inneren Deckschichten (78).

10. Verfahren einem der Ansprüche 7-9, wobei die eine oder die mehreren ersten Fasern Kohlenstoff- oder Aramidfasern umfassen.

11. Verfahren nach einem der Ansprüche 7-10, wobei die eine oder die mehreren zweiten Fasern Glasfasern, Polymerfasern, Holzfasern, Bambusfasern, Keramikfasern, Nanofasern oder Metallfasern umfassen.

12. Verfahren nach einem der Ansprüche 7-11, wobei das mindestens eine Blattsegment mindestens ein erstes Blattsegment und ein zweites Blattsegment, die sich von einer in Sehnenrichtung verlaufenden Verbindungsstelle in entgegengesetzten Richtungen erstrecken, umfasst, wobei das erste Blattsegment eine sich in Längsrichtung erstreckende Balkenstruktur umfasst, die mittels eines Aufnahmeabschnitts mit dem zweiten Blattsegment konstruktiv verbunden wird.

## Revendications

1. Pale de rotor (28) pour une éolienne (10), comportant :
au moins un segment de pale comportant au moins un élément formant coque (35) définissant une surface à profil aérodynamique, ledit au moins un élément formant coque (35) comportant une configuration de panneau sandwich, la configuration de panneau sandwich comportant une ou plusieurs couches de revêtement intérieures (78), un matériau central (80), et une ou plusieurs couches de revêtement extérieures (82), lesdites une ou plusieurs couches de revêtement extérieures (82) comportant une ou plusieurs premières fibres, lesdites une ou plusieurs couches de revêtement intérieures comportant une ou plusieurs deuxièmes fibres,
dans laquelle lesdites une ou plusieurs premières fibres sont différentes desdites une ou plusieurs deuxièmes fibres, lesdites une ou plusieurs premières fibres desdites une ou plusieurs couches de revêtement extérieures (82) présentant un module d'élasticité supérieur à un module d'élasticité desdites une ou plusieurs deuxièmes fibres desdites une ou plusieurs couches de revêtement intérieures (78),
dans laquelle le matériau central (80) est placé entre lesdites une ou plusieurs couches de revêtement extérieures (82) et lesdites une ou plusieurs couches de revêtement intérieures (78), et
dans lequel le matériau central (80) comporte au moins l'un parmi de la mousse ou du bois.

2. Pale de rotor selon la revendication 1, dans laquelle chacune desdites une ou plusieurs premières fibres desdites une ou plusieurs couches de revêtement extérieures (82) présente une densité plus légère que celle de chacune desdites une ou plusieurs deuxièmes fibres desdites une ou plusieurs couches de revêtement intérieures (78).

3. Pale de rotor selon la revendication 1 ou la revendication 2, dans laquelle lesdites une ou plusieurs premières fibres comportent des fibres de carbone ou d'aramide.

4. Pale de rotor selon l'une quelconque des revendications précédentes, dans laquelle lesdites une ou plusieurs deuxièmes fibres comportent des fibres de verre, des fibres polymères, des fibres de bois, des fibres de bambou, des fibres de céramique, des nanofibres, ou des fibres métalliques.

5. Pale de rotor selon l'une quelconque des revendications précédentes, dans laquelle ledit au moins un segment de pale comporte, au moins, un premier segment de pale et un deuxième segment de pale s'étendant dans des directions opposées depuis un joint dans le sens de la corde, le premier segment de pale comportant une structure de poutre s'étendant dans le sens de la longueur qui se raccorde structurellement au deuxième segment de pale par l'intermédiaire d'une section de réception.

6. Pale de rotor selon la revendication 5, comportant par ailleurs une pluralité de joints dans le sens de la corde.

7. Procédé de fabrication d'un élément formant coque (35) d'une pale de rotor (28) pour une éolienne (10), comportant les étapes consistant à :
placer une ou plusieurs couches de revêtement extérieures (82) de manière adjacente par rapport à un moule de l'élément formant coque (35), lesdites une ou plusieurs couches de revêtement extérieures (82) comportant une ou plusieurs premières fibres ;
placer une ou plusieurs couches de revêtement intérieures (78) de manière adjacente par rapport auxdites une ou plusieurs couches de revêtement extérieures (82), lesdites une ou plusieurs couches de revêtement intérieures (78) comportant une ou plusieurs deuxièmes fibres, lesdites une ou plusieurs premières fibres étant différentes desdites une ou plusieurs deuxièmes fibres, lesdites une ou plusieurs premières fibres desdites une ou plusieurs couches de revêtement extérieures (82) présentant un module d'élasticité supérieur à celui desdites une ou plusieurs deuxièmes fibres desdites une ou plusieurs couches de revêtement intérieures (78) ;
placer un matériau central (80) entre lesdites une ou plusieurs couches de revêtement extérieures (82) et lesdites une ou plusieurs couches de revêtement intérieures (78) ; et
infuser lesdites une ou plusieurs couches de revêtement extérieures (82), le matériau central (80) et lesdites une ou plusieurs couches de revêtement intérieures (78) ensemble au moyen d'un matériau à base de résine pour former l'élément formant coque (35),
dans lequel le matériau central (80) comporte au moins l'un parmi de la mousse ou du bois.

8. Procédé selon la revendication 7, dans lequel le matériau à base de résine comporte au moins l'un parmi un matériau thermodurci et un matériau thermoplastique.

9. Procédé selon l'une quelconque des revendications 7 à 8, dans lequel chacune desdites une ou plusieurs premières fibres desdites une ou plusieurs couches de revêtement extérieures (82) présente une densité plus légère que celle de chacune desdites une ou plusieurs deuxièmes fibres desdites une ou plusieurs couches de revêtement intérieures (78).

10. Procédé selon l'une quelconque des revendications 7 à 9, dans lequel lesdites une ou plusieurs premières fibres comportent des fibres de carbone ou d'aramide.

11. Procédé selon l'une quelconque des revendications 7 à 10, dans lequel lesdites une ou plusieurs deuxièmes fibres comportent des fibres de verre, des fibres polymères, des fibres de bois, des fibres de bambou, des fibres de céramique, des nanofibres, ou des fibres métalliques.

12. Procédé selon l'une quelconque des revendications 7 à 11, dans lequel ledit au moins un segment de pale comporte, au moins, un premier segment de pale et un deuxième segment de pale s'étendant dans des directions opposées depuis un joint dans le sens de la corde, le premier segment de pale comportant une structure de poutre s'étendant dans le sens de la longueur qui se raccorde structurellement au deuxième segment de pale par l'intermédiaire d'une section de réception.
